# EUROPÄISCHE PATENTSCHRIFT

(11) **EP 0 600 346 B1**
(45) Veröffentlichungstag und Bekanntmachung des Hinweises auf die Patenterteilung: **04.02.1998**
(21) Anmeldenummer: 93118826.2
(22) Anmeldetag: 23.11.1993
(51) Int. Cl.: F16L 55/17, F16L 55/178

(54) **Vorrichtung zum Abdichten eines Lecks an einem Hohlkörper**
Device for sealing a leak in a hollow body
Dispositif d'étanchéification d'une fuite à un corps creux

(30) Priorität: 01.12.1992 DE 4240368
(43) Veröffentlichungstag der Anmeldung: 08.06.1994
(73) Patentinhaber: Furmanite Technische Dienstleistungen GmbH, 60327 Frankfurt (DE)
(72) Erfinder: Osterlitz, Hermann, Dipl.-Ing., D-65189 Wiesbaden (DE); Grob, Oliver, D-42279 Wuppertal (DE)
(74) Vertreter: Weber, Otto Ernst, Dipl.-Phys.

(56) Entgegenhaltungen:
- CH-A- 384 301
- FR-A- 1 428 511
- GB-A- K7 717
- US-A- 5 012 842

## Beschreibung

Die Erfindung betrifft eine Vorrichtung zum Abdichten eines Lecks an einem Hohlkörper, insbesondere an einer Rohrleitung oder einem Behälter, mit einer um den Hohlkörper anbringbaren und daran andrückbaren Spannvorrichtung, zumindest einem an der Spannvorrichtung befestigbaren und gegen den Hohlkörper pressbaren Druckstempel sowie einem zwischen Druckstempel und Hohlkörper einsetzbaren Dichtungselement.

Es kommt vor, daß an Rohrleitungen oder Behältern, insbesondere im Bereich von Schweißnähten von Stutzen- oder Rohreintritten in Tanks oder Behältern Lecks auftreten. Aus derartigen Lecks tritt in der Regel im Behälter vorhandenes bzw. durch die Rohrleitung transportiertes Fluid aus, das regelmäßig unter Druck steht. Häufig ist es nicht möglich, den Behälter zu entleeren bzw. den Fluidkreislauf zu unterbrechen, um eine Reparatur an der Leckstelle vorzunehmen. Insbesondere dann, wenn der Behälter bzw. die Rohrleitung nicht auf herkömmliche Weise repariert werden können, wie dies beispielsweise in Kernkraftanlagen der Fall ist, treten große Probleme auf, wenn ein Leck abgedichtet werden soll.

Eine Vorrichtung zum Abdichten eines Lecks der eingangs genannten Art ist aus der CH-A-384 301 bekannt. In dieser Vorrichtung wird die Spannvorrichtung von einem Flanschkörper, der Druckstempel von einem Druckring mit Druckschrauben und das einsetzbare Dichtungselement von einem Dichtring gebildet.

Eine vergleichbare Abdichtvorrichtung ist auch aus der FRA-1,428,511 bekannt.

Die US-A-5,012,842 offenbart eine als Gliederkette ausgebildete Spannvorrichtung. Die Gliederkette drückt eine Hülle, die die Funktion eines Dichtungselements übernimmt, an ein leckendes Rohr. Ein Druckstempel wird dabei nicht verwendet.

Eine weitere Dichtungsvorrichtung wird in der GB-A-K 7717 beschrieben. Bei dieser Dichtungsvorrichtung wird zum Abdichten eines Lecks ein rundschnurartiges Dichtungselement mit Hilfe eines Bolzens und eines Spannrings zusammengepreßt.

Der Erfindung liegt die **Aufgabe** zugrunde, eine Vorrichtung zum Abdichten eines Lecks der eingangs genannten Art zu schaffen, bei der der Druckstempel zielgenau auf den Ort des Lecks ausgerichtet werden kann.

Diese Aufgabe wird mit dem kennzeichnenden Merkmal des Anspruchs 1 gelöst.

Die um den Hohlkörper anbringbare und festspannbare Spannvorrichtung kann schnell um den Hohlkörper gelegt werden und ebenso schnell können an der Spannvorrichtung im Bereich des Lecks die Druckstempel befestigt und auf das Dichtungselement gegen den Hohlkörper gepreßt werden, die dabei das Dichtungselement zwischen sich und dem Hohlkörper auf das Leck pressen, wodurch das Leck sicher abgedichtet wird. Besonders vorteilhaft ist dabei die Ausgestaltung der Spannvorrichtung als Gliederkette gemäß Anspruch 2, da diese sehr hohe Spannkräfte aufbringen kann.

Da die Druckstempel an einer Klemmvorrichtung verstellbar gelagert sind wird ein individuelles Einstellen der auf die Dichtung wirkenden Druckkraft ermöglicht, wobei die Druckstempel schnell und einfach an den Gliedern der Gliederkette montierbar, beispielsweise gemäß Anspruch 3 festklemmbar sind.

Eine besonders vorteilhafte und vielseitige Ausgestaltung der Erfindung ist im Anspruch 4 angegeben, wobei die Schwenkbarkeit des Druckstempels mittels des Lagerelements ein genaues Ausrichten des Druckstempels auf den Ort des Lecks gestattet, was insbesondere bei in Innenecken des Hohlkörpers gelegenen Lecks, wie beispielsweise im Bereich der Verschneidung zwischen einem kesselartigen Behälter und einem aus diesem herausgeführten Rohrstutzen vorteilhaft ist.

Die Weiterbildung gemäß Anspruch 5 gestattet dabei ein besonders dosiertes und sicheres Aufbringen der Dichtkraft, wobei insbesondere die Ausbildung gemäß Anspruch 6 eine Anpassung an die Geometrie des Hohlkörpers im Bereich des Lecks gestattet.

Die verbleibenden Ansprüche geben weitere vorteilhafte Ausgestaltungen der Erfindung an.

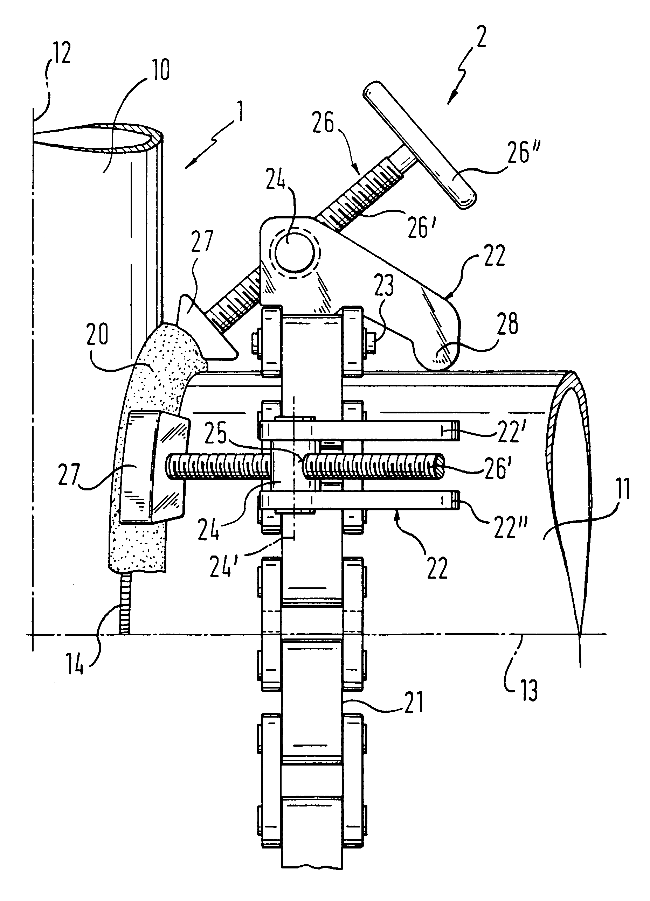

Die Erfindung wird nachfolgend anhand eines Beispiels unter Bezugnahme auf die Zeichnung näher erläutert, in dieser zeigt die einzige Figur eine Seitenansicht einer Vorrichtung gemäß der Erfindung.

Der Hohlkörper 1 besteht aus einem rohrförmigen Behälter 10, beispielsweise einem Tank und einem mit dem rohrförmigen Behälter 10 verbundenen rohrförmigen Anschlußstutzen 11. Die Längsachse 12 des rohrförmigen Behälters 10 und die Längsachse 13 des rohrförmigen Anschlußstutzens 11 stehen dabei im wesentlichen senkrecht aufeinander. Der rohrförmige Behälter 10 und der rohrförmige Anschlußstutzen 11 sind über eine Schweißnaht 14 miteinander verbunden. Im Bereich der Schweißnaht 14 ist eine Leckstelle (nicht sichtbar) vorhanden, über die eine Dichtung 20 gelegt ist. Die Dichtung 20 erstreckt sich dabei entlang eines Teilabschnitts der Schweißnaht 14.

Um den rohrförmigen Stutzen 11 ist eine als Spannvorrichtung dienende Rollen- oder Gliederkette 21 der Vorrichtung 2 zum Abdichten von Lecks gespannt. Der rohrförmige Stutzen 11 wird dabei von der Gliederkette 21 umschlungen, und die Gliederkette wird mittels eines nicht gezeigten Spannschlosses derart festgespannt, daß die radial einwärts gegen den rohrförmigen Stutzen 11 wirkenden Kräfte die Kette sowohl in Radialrichtung als auch in Axialrichtung bezüglich des rohrförmigen Stutzens 11 fixieren.

Im Bereich der Leckstelle sind an einander benachbart gelegenen Kettengliedern Klemmvorrichtungen 22 befestigt, wobei die Klemmvorichtungen einen ersten Befestigungsabschnitt aufweisen, der in das Kettenglied eingreift und dort mittels eines durch das Kettenglied gesteckten Bolzens 23 befestigt wird. Im wesentlichen radial auswärts bezüglich des Kettengliedes ist die Klemmvorrichtung 22 mit zwei sich radial auswärts und quer zum Verlauf der Kette erstreckenden Lageransätzen 22' und 22" versehen, die jeweils ein Lagerauge aufweisen, in denen ein Lagerelement 24 um eine Achse 24' schwenkbar gelagert ist, die im wesentlichen parallel zu einer an der Gliederkette anliegenden Tangente verläuft.

Das Lagerelement 24 besitzt eine im wesentlichen rechtwinklig zu seiner Achse 24' verlaufende Führungsöffnung 25, die mit einem Innengewinde versehen ist und durch die der mit einem Außengewinde versehene Schaft 26' eines Druckstempels 26 geführt ist. Der Druckstempel 26 besitzt an seinem zur Dichtung 20 weisenden Ende einen Druckschuh 27, der als Formstück ausgebildet ist. An seinem anderen Ende ist der Druckstempel 26 mit einem Handrad 26" versehen. Zur Anpassung an die Geometrie im Bereich des abzudichtenden Lecks ist der als Formstück ausgebildete Druckschuh 27 auswechselbar gestaltet oder zumindest mit einem auswechselbaren Formstück versehen.

An seinem bezüglich des Druckschuhs 27 abgewandten Ende sind die beiden Schenkel 22' und 22" der Klemmvorrichtung 22 mit jeweils einem Stützfuß 28 versehen, der sich gegen den rohrförmigen Stutzen 11 abstützt.

Zur Abdichtung wird zunächst die Gliederkette 21 um den rohrförmigen Stutzen 11 gelegt und mittels der Spannvorrichtung verspannt. Daraufhin werden im Bereich des Lecks mit Druckstempeln 26 versehene Klemmvorrichtungen 22 an ausgewählten Kettengliedern befestigt. In der Folge wird die Dichtung 20 auf den abzudichtenden Bereich gelegt und mittels der Druckschuhe 27 der Druckstempel 26 gegen den rohrförmigen Behälter 10 bzw. den rohrförmigen Stutzen 11 gepreßt. Die Dichtung kann dabei aus einem elastischen Kunststoff, beispielsweise Polytetrafluorethylen (PTFE), Polyethylen (PE) oder Schaumstoff bestehen. Die Dichtung kann nur im Bereich des Lecks aufgelegt sein aber auch den gesamten Verlauf der Schweißnaht 14 abdecken. Außer einfachen kreisförmigen bzw. ellipsenförmigen Schnittkurven wie im Beispiel der gezeigten Figur kann die Schnittkurve auch eine kompliziertere Geometrie aufweisen, wobei beispielsweise auch Ecken oder Kanten mittels geeigneter Formstücke abgedichtet werden können. Ein vorteilhafter Abstand zwischen zwei Druckstempeln liegt beispielsweise bei 100 mm im Leckbereich.

## Patentansprüche

1. Vorrichtung zum Abdichten eines Lecks an einem Hohlkörper, insbesondere an einer Rohrleitung oder einem Behälter, mit einer um den Hohlkörper (1) anbringbaren und daran andrückbaren Spannvorrichtung (21), zumindest einem an der Spannvorrichtung (21) befestigbaren und gegen den Hohlkörper (1) preßbaren Druckstempel (26) sowie einem zwischen Druckstempel (26) und Hohlkörper (1) einsetzbaren Dichtungselement (20),
dadurch **gekennzeichnet**,
daß der Druckstempel (26) an einer an der Spannvorrichtung (21) anbringbaren Klemmvorrichtung (22) schwenkbar in einem Lagerelement (24) gelagert ist.

2. Vorrichtung nach Anspruch 1,
dadurch **gekennzeichnet**,
daß die Spannvorrichtung (21) durch eine Gliederkette gebildet ist, die mit einem Spannschloß zur radial einwärts wirkenden Spannkraftausübung versehen ist.

3. Vorrichtung nach Anspruch 1 oder 2,
dadurch **gekennzeichnet**,
daß die Klemmvorrichtung (22) an einem Glied der Gliederkette (21) festklemmbar ist.

4. Vorrichtung nach einem der vorhergehenden Ansprüche,
dadurch **gekennzeichnet**,
daß jede Klemmvorrichtung (22) ein um eine zur um den Hohlkörper (1) angeordneten Spannvorrichtung (21) im wesentlichen tangential oder tangentenparallel verlaufende Achse (24') schwenkbares Lagerelement (24) aufweist und daß das Lagerelement (24) eine im wesentlichen rechtwinklig zur Achse (24') verlaufende Führungsöffung (25) für einen Schaft (26') des Druckstempels (26) aufweist.

5. Vorrichtung nach Anspruch 4,
dadurch **gekennzeichnet**,
daß die Führungsöffnung (25) ein Innengewinde und der Schaft (26') des Druckstempels (26) ein angepaßtes Außengewinde aufweist und daß der Druckstempel (26) an seinem dem Hohlkörper (1) zugewandten Ende mit einm Druckschuh (27) und an seinem anderen Ende mit einem Drehhebel oder einem Handrad (26) versehen ist.

6. Vorrichtung nach Anspruch 5,
dadurch **gekennzeichnet**,
daß der Druckschuh (27) zumindest ein auswechselbares Formstück umfaßt.

7. Vorrichtung nach einem der vorhergehenden Ansprüche,
dadurch **gekennzeichnet**,
daß das Dichtungselement (20) aus einem elastischen Material besteht und rundschnurartig ausgebildet ist.

8. Vorrichtung nach Anspruch 7,
dadurch **gekennzeichnet**,
daß das Dichtungselement (20) aus einem Kunststoff, wie Polyethylen (PE), Polytetrafluorethylen (PTFE) oder Schaumgummi besteht.

9. Vorrichtung nach einem der vorhergehenden Ansprüche,
dadurch **gekennzeichnet**,
daß der Bolzenabstand der Gliederkette etwa 100 mm beträgt.

## Claims

1. Device for sealing a leak in a hollow body, particularly in a pipeline or container, with a tensioning device (21) fittable round the hollow body (1) and pressable against the latter, at least one pressure plunger (26) fixable to the tensioning device (21) and pressable against the hollow body (1), as well as a sealing element (20) insertable between the pressure plunger (26) and hollow body (1), characterized in that the pressure plunger (26) is pivotably mounted in a bearing element (24) on a clamping device (22) fittable to the tensioning device (21).

2. Device according to claim 1, characterized in that the tensioning device (21) is formed by a link chain, which is provided with a tension lock for the radially inwardly acting tension application.

3. Device according to claim 1 or 2, characterized in that the clamping device (22) can be fixed to a link of the link chain (21).

4. Device according to one of the preceding claims, characterized in that each clamping device (22) has a bearing element (24) pivotable about an axis (24') substantially tangential or tangent-parallel to the tensioning device (21) arranged round the hollow body (1) and that the bearing element (24) has a guide opening (25) for a shaft (26') of the pressure plunger (26) running substantially at right angles to the axis (24').

5. Device according to claim 4, characterized in that the guide opening (25) has an internal thread and the shaft (26') of the pressure plunger (26) a matching external thread and that the pressure plunger (26) on its end facing the hollow body (1) is provided with a pressure shoe (27) and on its other end with a rotary lever or handle (26).

6. Device according to claim 5, characterized in that the pressure shoe (27) includes at least one replaceable fitting.

7. Device according to one of the preceding claims, characterized in that the sealing element (20) is made from an elastic material and has a round cord-like construction.

8. Device according to claim 7, characterized in that the sealing element (20) is made from a plastic, such as polyethylene (PE), polytetrafluorethylene (PTFE) or foam rubber.

9. Device according to one of the preceding claims, characterized in that the pin spacing of the link chain is approximately 100 mm.

## Revendications

1. Dispositif pour étancher une fuite sur un corps creux, en particulier sur une conduite ou un réservoir, avec un dispositif de serrage (21) se rapportant autour du corps creux (1) et pouvant être pressé contre celui-ci, au moins un poinçon (26) pouvant se fixer sur le dispositif de serrage (21) et être pressé contre le corps creux (1), ainsi qu'un élément d'étanchéité (20) pouvant s'insérer entre le poinçon (26) et le corps creux (1), ***caractérisé en ce que*** le poinçon (26) est monté pivotant dans un élément support (24) contre un dispositif de blocage (22) pouvant se rapporter sur le dispositif de serrage (21).

2. Dispositif selon la Revendication 1, ***caractérisé en ce que*** le dispositif de serrage (21) est formé d'une chaîne à maillons qui est munie d'un tendeur afin d'exercer une force de serrage vers l'intérieur dans le sens radial.

3. Dispositif selon la Revendication 1 ou 2, ***caractérisé en ce que*** le dispositif de blocage (22) peut se fixer sur un maillon de la chaîne (21).

4. Dispositif selon l'une quelconque des Revendications précédentes, ***caractérisé en ce que*** chaque dispositif de blocage (22) présente un élément support (24) pivotant autour d'un axe (24') s'étendant pour l'essentiel tangentiellement ou parallèlement à la tangente au dispositif de serrage (21) placé autour du corps creux (1), et ***en ce que*** l'élément support (24) présente une ouverture de guidage (25), sensiblement perpendiculaire à l'axe (24'), pour une tige (26') du poinçon (26).

5. Dispositif selon la Revendication 4, ***caractérisé en ce que*** l'ouverture de guidage (25) présente un filetage intérieur et la tige (26') du poinçon (26) présente un filetage extérieur adapté, et ***en ce que*** le poinçon (26) est muni d'un sabot de pression (27) à son extrémité tournée vers le corps creux (1), et d'un levier rotatif ou d'un volant (26) à son autre extrémité.

6. Dispositif selon la Revendication 5, ***caractérisé en ce que*** le sabot de pression (27) comprend au moins une pièce moulée interchangeable.

7. Dispositif selon l'une quelconque des Revendications précédentes, ***caractérisé en ce que*** l'élément d'étanchéité (20) se compose d'un matériau élastique et est conformé à la manière d'un cordon rond.

8. Dispositif selon la Revendication 7, ***caractérisé en ce que*** l'élément d'étanchéité (20) se compose d'une matière synthétique comme du polyéthylène (PE), du polytétrafluoréthylène (PTFE) ou de la mousse de caoutchouc.

9. Dispositif selon l'une quelconque des Revendications précédentes, ***caractérisé en ce que*** la distance entre goujons de la chaîne à maillons vaut environ 100 mm.
